# EUROPÄISCHE PATENTSCHRIFT

(11) **EP 4 163 823 B1**
(45) Veröffentlichungstag und Bekanntmachung des Hinweises auf die Patenterteilung: **16.04.2025**
(21) Anmeldenummer: 22206249.9
(22) Anmeldetag: 09.06.2022
(51) Int. Cl.: G06K 19/04, G06K 19/06

(54) **VORRICHTUNG ZUR PRÄSENTATION EINES CODES**
DEVICE FOR PRESENTING A CODE
DISPOSITIF DE PRÉSENTATION D'UN CODE

(30) Priorität: 30.06.2021 DE 102021206872
(43) Veröffentlichungstag der Anmeldung: 12.04.2023
(62) Teilanmeldung aus: 22754300.6
(73) Patentinhaber: Pepperl+Fuchs SE, 68307 Mannheim (DE)
(72) Erfinder: Siebert, Gerhard, 67227 Frankenthal (DE)
(74) Vertreter: Ullrich & Naumann PartG mbB

(56) Entgegenhaltungen:
- EP-A2- 0 579 486
- EP-A2- 1 830 311
- DE-A1- 3 300 908
- US-A- 4 649 658

## Beschreibung

Die Erfindung betrifft eine Vorrichtung zur Präsentation eines Codes, insbesondere Codeband oder Codestreifen, mit einem Träger und mindestens einem dem Träger zugeordneten Code, wobei der Träger eine Kopplungseinrichtung zur Kopplung des Trägers mit einem weiteren Träger aufweist, wobei die Kopplungseinrichtung ein Eingriffselement und ein Aufnahmeelement für das Eingriffselement aufweist, wobei ein Eingriffselement eines Trägers mit einem Aufnahmeelement eines weiteren Trägers zur Kopplung der beiden Träger miteinander in Eingriff bringbar ist und wobei mindestens ein Code dem Eingriffselement zugeordnet oder auf dem Eingriffselement angeordnet ist.

Vorrichtungen der eingangs genannten Art sind aus der Praxis bekannt und existieren beispielsweise in Form von Codebändern oder Codestreifen, wobei auf einen metallischen Träger aufgedruckte oder auf andere Art und Weise dem Träger zugeordnete Codes von geeigneten Leseeinrichtungen oder Detektoren gelesen und detektiert werden.

Beispielsweise sind sowohl aus der US 4 649 658 A als auch aus der DE 33 00 908 A1 Vorrichtungen der eingangs genannten Art bekannt, wobei Codeträger miteinander koppelbar sind.

Aus dem Stand der Technik sind des Weiteren Systeme aus Codeband und Lesekopf bekannt, die ursprünglich aus schienengeführten Anwendungen stammen, bei denen beispielsweise Fahrzeuge auf Schienen geführt werden und eine Positionsbestimmung der Fahrzeuge relativ zu den Schienen oder einer Umgebung erfolgt. In jüngerer Zeit erfolgte eine Adaption der Systeme auf einen Untergrund oder Boden, beispielsweise zur Spurführung von fahrerlosen Transportsystemen. Durch das fahrerlose Transportsystem selbst, aber auch durch beispielsweise Staplerverkehr ist ein auf dem Untergrund oder Boden angeordnetes Codeband starken mechanischen Belastungen ausgesetzt, was leicht zu Beschädigungen und/oder Verschiebungen relativ zueinander positionierter Träger oder Codebänder führen kann, wenn beispielsweise mehrere hintereinander angeordnete Träger eine längere Codestrecke bilden. Im Ergebnis ist die Funktion eines solchen Codebands oder einer solchen aus mehreren Trägern gebildeten Codestrecke nicht mehr gewährleistet.

Des Weiteren ist auch ein Verlegen mehrerer Träger hintereinander aufgrund der für ein sicheres Funktionieren einer Codestrecke erforderlichen genauen Positionierung der Träger relativ zueinander mit der bekannten Vorrichtung nicht einfach. Dies gilt nicht nur bei einem ersten Verlegen einer Codestrecke und einem Verlegen einer Codestrecke um Kurven, sondern auch bei einem durch Verschleiß bedingten Austausch einzelner oder mehrerer Träger. Eine robuste und modulare Lösung, die ein einfaches Austauschen einzelner Träger ermöglicht, ist in der Praxis wünschenswert, um ein sicheres Funktionieren insbesondere einer aus mehreren Trägern gebildeten Codestrecke dauerhaft zu gewährleisten.

Der vorliegenden Erfindung liegt daher die Aufgabe zugrunde, eine Vorrichtung zur Präsentation eines Codes der eingangs genannten Art derart auszugestalten und weiterzubilden, dass eine sichere Installation mehrerer Träger relativ zueinander mit konstruktiv einfachen Mitteln ermöglicht ist.

Erfindungsgemäß wird die voranstehende Aufgabe durch eine Vorrichtung zur Präsentation eines Codes mit den Merkmalen des Anspruchs 1 gelöst. Danach ist die Vorrichtung derart ausgestaltet und weitergebildet, dass das Eingriffselement und das Aufnahmeelement im zusammengefügten Zustand relativ zueinander verschwenkbar sind.

In erfindungsgemäßer Weise ist zunächst erkannt worden, dass durch geschickte Ausgestaltung des Trägers die voranstehende Aufgabe auf überraschend einfache Weise gelöst wird. Der Träger weist eine Kopplungseinrichtung zur Kopplung des Trägers mit einem weiteren Träger auf. Eine derartige Kopplungseinrichtung ermöglicht ein vorgebbares relatives Positionieren zweier oder mehrerer Träger hintereinander. Dabei kann in einer gewünschten Reihe ein Träger an einen anderen usw. gekoppelt werden, sodass eine Codestrecke quasi beliebiger Länge realisierbar ist. Hierbei sind immer zwei Träger sicher aneinandergefügt, sodass auch eine mechanische Belastung durch Transportsysteme oder Staplerverkehr in ihren Auswirkungen, beispielsweise ein ungewolltes Verschieben der Träger relativ zueinander, stark vermindert werden kann. Mittels einer derartigen Kopplungseinrichtung wird nicht nur ein erstes Verlegen mehrerer Träger zur Bildung einer Codestrecke stark vereinfacht, sondern auch ein Austausch verschlissener Träger einfach ermöglicht. Hierbei kann ein unversehrter Träger mittels der Kopplungseinrichtung im Austausch gegen einen verschlissenen Träger sicher in eine vorhandene Codestrecke eingefügt werden. Ein erforderliches genaues Ausrichten der Codes zueinander ist über die Kopplung der Träger und deren Ausrichtung zueinander mittels der Kopplungseinrichtung einfach und sicher ermöglicht.

Bei der Vorrichtung ist mindestens ein Code dem Eingriffselement zugeordnet oder auf dem Eingriffselement angeordnet. Hierdurch ist eine kontinuierliche Abfolge aneinander angeordneter Codes und damit auch eine für die Funktion einer durch mehrere Träger gebildeten Codestrecke sichere Installation mehrerer Träger relativ zueinander mit konstruktiv einfachen Mitteln ermöglicht.

Folglich ist mit der erfindungsgemäßen Vorrichtung zur Präsentation eines Codes eine Vorrichtung bereitgestellt, wonach eine sichere Installation mehrerer Träger relativ zueinander mit konstruktiv einfachen Mitteln ermöglicht ist.

Im Hinblick auf eine besonders sichere Installation mehrerer Träger relativ zueinander kann die Kopplungseinrichtung ein männliches Eingriffselement und ein weibliches Aufnahmeelement für das Eingriffselement aufweisen, wobei ein Eingriffselement eines Trägers mit einem Aufnahmeelement eines weiteren Trägers zur Kopplung der beiden Träger miteinander eingreifen kann. Durch einen mittels des Eingriffselements und des Aufnahmeelements realisierten Eingriff ist eine sichere Kopplung zweier Träger gewährleistet, wobei ein durch äußere Krafteinwirkung erzeugtes ungewünschtes Verschieben der Träger relativ zueinander im installierten Zustand weitestgehend verhindert werden kann. Bei geeigneter Ausgestaltung des Eingriffselements und des Aufnahmeelements kann eine erforderliche relative Positionierung oder Ausrichtung zweier Träger zueinander sicher und dauerhaft vorgegeben werden.

Weiterhin im Hinblick auf eine besonders sichere Installation mehrerer Träger relativ zueinander können das Eingriffselement und das Aufnahmeelement komplementär zueinander ausgebildet sein. Hierdurch sind eine besonders sichere Kopplung und ein besonders sicherer Eingriff eines Eingriffselements mit einem Aufnahmeelement gewährleistet, insbesondere zur Gewährleistung einer erforderlichen dauerhaften relativen Positionierung zweier Träger zueinander.

In besonders vorteilhafter Weise kann der Träger sowohl ein Eingriffselement als auch ein Aufnahmeelement aufweisen. Dies ermöglicht eine sichere und flexible Kopplung des Trägers mit quasi beliebigen weiteren Trägern. Je nach Erfordernis kann der Träger auch nur ein Eingriffselement oder nur ein Aufnahmeelement aufweisen, beispielsweise am Beginn und/oder am Ende einer zu realisierenden Codestrecke.

Bei einer weiteren vorteilhaften Ausführungsform kann die Kopplungseinrichtung derart ausgebildet sein, dass ein lückenloses und/oder formschlüssiges Koppeln von Trägern miteinander ermöglicht ist, wobei vorzugsweise ein Eingriffselement puzzleartig mit einem Aufnahmeelement zusammenfügbar ist. Hierdurch ist eine besonders einfache Verlegung mit einer vorgebbaren Ausrichtung der Träger und damit auch der Codes zueinander ermöglicht.

Im Hinblick auf eine besonders einfache und sichere Installation mehrerer Träger relativ zueinander, insbesondere in einem vorgebbaren Winkel relativ zueinander, sind das Eingriffselement und das Aufnahmeelement im zusammengefügten Zustand relativ zueinander verschwenkbar, wobei vorzugsweise das Eingriffselement und das Aufnahmeelement derart ausgebildet sein können, dass im zusammengefügten Zustand des Eingriffselements und des Aufnahmeelements zwischen dem Eingriffselement und dem Aufnahmeelement mindestens eine Aussparung zur Ermöglichung eines derartigen Verschwenkens gebildet ist. Hierdurch kann eine vorgebbare Winkelpositionierung der Träger relativ zueinander - im zusammengefügten Zustand von Eingriffselement und Aufnahmeelement - vorgenommen werden. Beim Vorgang der Winkelpositionierung sind die zu koppelnden Träger somit schon zusammengefügt, sodass ein ungewünschtes Entkoppeln bereits gekoppelter Träger während der Winkelpositionierung vermieden werden kann. Das Verschwenken kann im Umfang der realisierten Aussparung erfolgen, wobei die jeweiligen Enden einer Aussparung einen mechanischen Anschlag für die Schwenkbewegung der Träger relativ zueinander bilden können. Die Größe der Aussparung kann hierbei den Winkelbereich der Schwenkbewegung vorgeben.

In konstruktiv besonders einfacher Weise kann das Eingriffselement einen kreisscheibenförmigen Abschnitt aufweisen, wobei vorzugsweise das Aufnahmeelement eine zu dem kreisscheibenförmigen Abschnitt des Eingriffselements im Wesentlichen komplementäre Ausnehmung aufweisen kann. Ein derartiger kreisscheibenförmiger Abschnitt kann insbesondere in Verbindung mit einer entsprechenden komplementären Ausnehmung eines Aufnahmeelements die voranstehend beschriebene Schwenkbewegung der Träger relativ zueinander auf besonders einfache Weise ermöglichen. Der kreisscheibenförmige Abschnitt kann bei der Schwenkbewegung mit seinem äußeren Rand an einem inneren Rand der komplementär ausgebildeten Ausnehmung entlang geleiten. Das hier zugrunde liegende Prinzip gleicht in zweidimensionaler Form etwa dem Prinzip eines Kugelgelenks mit einer in einer Pfanne angeordneten und bewegbaren Kugel, wobei das Eingriffselement der Kugel und das Aufnahmeelement der Pfanne entsprächen.

Bei einer vorteilhaften Ausführungsform kann mindestens ein Code dem kreisscheibenförmigen Abschnitt zugeordnet oder auf dem kreisscheibenförmigen Abschnitt angeordnet sein.

Weiterhin im Hinblick auf eine sichere Installation mehrerer Träger relativ zueinander kann die Kopplungseinrichtung mindestens ein dem Aufnahmeelement oder dem Eingriffselement zuordenbares - vorzugsweise abnehmbares - Blockierelement zur Verhinderung eines Verschwenkens des Eingriffselements und des Aufnahmeelements - im zusammengefügten Zustand des Eingriffselements und des Aufnahmeelements - relativ zueinander aufweisen. Hierdurch ist eine geradlinige Anordnung mehrerer Träger hintereinander mit konstruktiv einfachen Mitteln ermöglicht, wobei ein Blockierelement beispielsweise in einer zwischen dem Eingriffselement und dem Aufnahmeelement gebildeten Aussparung angeordnet werden kann, um ein Verschwenken zweier Träger relativ zueinander zu verhindern. Derartige Blockierelemente können grundsätzlich in Aussparungen angeordnet oder vorgesehen sein, um eine geradlinige und fluchtende Anordnung von Trägern relativ zueinander zu ermöglichen. Sollte dann eine Kurve zu verlegen sein, kann das oder können die Blockiererelemente aus einer Aussparung herausgenommen und eine entsprechende Winkelstellung zwischen zwei Trägern durch ein Verschwenken der beiden Träger relativ zueinander gebildet werden.

In konstruktiv besonders einfacher Weise kann der Träger aus Metall, beispielsweise aus Aluminium, ausgebildet sein oder metallische Bestandteile, beispielsweise Aluminium, aufweisen. Insbesondere bei einer Verwendung von Aluminium ist eine robuste und hinsichtlich des Gewichts leichte und dadurch sicher und einfach handhabbare Ausgestaltung eines Trägers ermöglicht. Weiterhin im Hinblick auf ein sicheres Installieren, beispielsweise ein Verlegen von Trägern auf einem flächigen Untergrund, kann der Träger flächig ausgebildet sein. Hierdurch ist eine vollflächige und damit sichere und stabile Auflage von Trägern auf einem flächigen Untergrund ermöglicht.

Mit der erfindungsgemäßen Vorrichtung zur Präsentation eines Codes ist eine genaue Ausrichtung von Codes zueinander beim Verlegen ermöglicht, wobei sowohl gerade Codestrecken und - bei geeigneter Ausgestaltung der Kopplungseinrichtung - auch Kurven aus Codes mittels der Träger sicher verlegt werden können. Dabei wird an Stoßstellen zwischen Trägern kein Code unlesbar und der Abstand von Codes vergrößert sich nicht beim Verlegen von Kurven, wie dies bei herkömmlichen rechteckigen Trägern oder Codestreifen ohne geeignete Kopplungseinrichtung auftreten kann.

Mit der erfindungsgemäßen Vorrichtung ist eine einfache und sichere Verlegung sowohl geradeaus als auch in frei wählbaren Biegeradien ermöglicht. Darüber sind eine einfache Austauschbarkeit und ein professionelles Erscheinungsbild realisiert.

Im Rahmen der vorliegenden Erfindung ist der Begriff "Code" im weitesten Sinne zu verstehen, sodass von diesem Begriff "Code" unterschiedlichste Ausgestaltungen von Codes umfasst sind. Dies können ohne Einschränkung beispielsweise 2D-Codes, Matrixcodes, Datamatrix-Codes, QR-Codes, Barcodes oder sonstige Codes sein.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele des erfindungsgemäßen Verfahrens sowie der erfindungsgemäßen Vorrichtung anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigen
- Fig. 1: in einer Draufsicht, schematisch, ein Ausführungsbeispiel der erfindungsgemäßen Vorrichtung zur Präsentation eines Codes mit drei Trägern,
- Fig. 2: in einer Draufsicht, schematisch und vergrößert, zwei Träger des Ausführungsbeispiels in einer gekoppelten und geradlinigen Anordnung und
- Fig. 3: in einer Draufsicht, schematisch und vergrößert, zwei Träger des Ausführungsbeispiels in einer gekoppelten und relativ zueinander verschwenkten Anordnung.

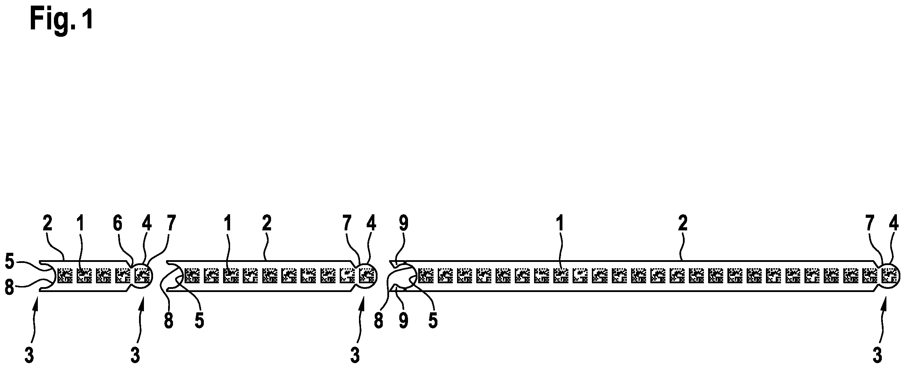

Fig. 1 zeigt in einer schematischen Draufsicht ein Ausführungsbeispiel der erfindungsgemäßen Vorrichtung zur Präsentation eines Codes, wobei mehrere Codes 1 in Längsrichtung hintereinander insgesamt drei metallischen Trägern 2 zugeordnet sind. Jeder Träger 2 bildet somit einen Codestreifen, wobei die in Fig. 1 gezeigten drei Codestreifen unterschiedliche Längen aufweisen, um unterschiedlichen Installationsanforderungen gerecht werden zu können. Jeder der drei Träger 2 oder Codestreifen kann mit einem der anderen Träger 2 oder Codestreifen gekoppelt werden. Der in Fig. 1 links gezeigte Träger 2 weist insgesamt vier Codes 1 auf.

Die Codes 1 sind bei diesem Ausführungsbeispiel als Datamatrix-Codes ausgebildet. Mehrere derartige Träger 2 oder Codestreifen können hintereinander angeordnet werden, um eine durchgängige Code-Anordnung oder Codeleiste zu bilden.

Die Träger 2 sind in Fig. 1 im entkoppelten Zustand gezeigt. Mittels einer Kopplungseinrichtung 3 können die Träger 2 jeweils untereinander gekoppelt werden. Die Kopplungseinrichtung 3 weist ein männliches Eingriffselement 4 und ein weibliches Aufnahmeelement 5 für das Eingriffselement 4 auf. Jeder Träger 2 weist sowohl ein Eingriffselement 4 als auch ein Aufnahmeelement 5 auf, wobei das Eingriffselement 4 und das Aufnahmeelement 5 im Wesentlichen komplementär zueinander ausgebildet sind.

Die Verbindung der durch die Träger 2 gebildeten Codestreifen ist dem Puzzle-Prinzip ähnlich. Mit dem Trägern 2 können sowohl geradlinige Codeabschnitte oder Codestrecken als auch Codeabschnitte oder Codestrecken erzeugt werden, die um Kurven gehen oder Kurven bilden.

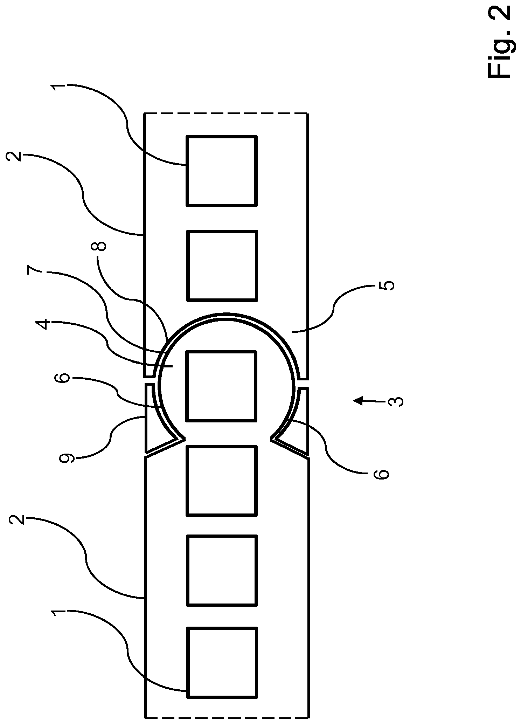

Hierzu zeigt Fig. 2 in einer schematischen und vergrößerten Draufsicht sowie teilweise einen Kopplungsbereich einer geradlinigen Codestrecke. Dabei befinden sich das Eingriffselement 4 und das Aufnahmeelement 5 der Kopplungseinrichtung 3 im gekoppelten Zustand.

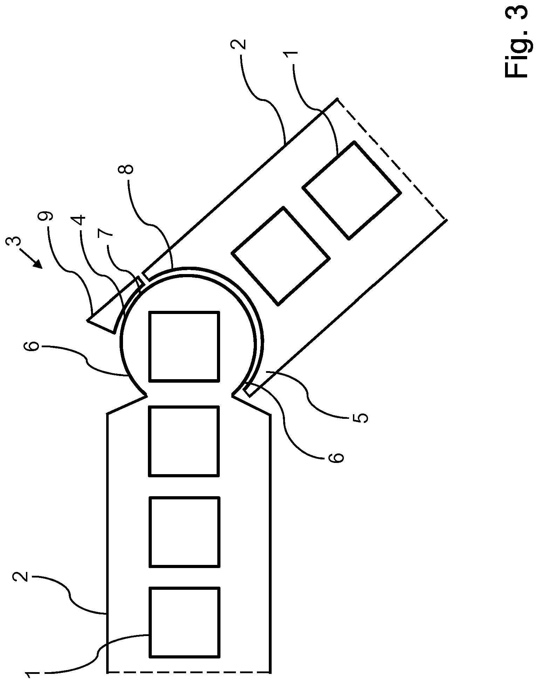

Des Weiteren zeigt Fig. 3 in einer schematischen und vergrößerten Draufsicht sowie teilweise einen Kopplungsbereich einer kurvigen Codestrecke. Dabei befinden sich das Eingriffselement 4 und das Aufnahmeelement 5 der Kopplungseinrichtung 3 im gekoppelten Zustand, wobei die jeweiligen Träger 2 um eine Schwenkachse zueinander verschwenkt sind. Die Schwenkachse befindet sich in etwa in der Mitte des kreisscheibenförmigen Eingriffselements 4. Damit dieses Verschwenken möglich ist, sind im Wesentlichen zwischen dem Eingriffselement 4 und dem Aufnahmeelement 5 zwei Aussparungen 6 gebildet. Das Eingriffselement 4 weist im Konkreten einen kreisscheibenförmigen Abschnitt 7 auf, wobei das Aufnahmeelement 5 eine zu dem kreisscheibenförmigen Abschnitt 7 des Eingriffselements 4 im Wesentlichen komplementäre Ausnehmung 8 aufweist. Beim Verschwenken der beiden Träger 2 relativ zueinander gleitet der äußere Rand des kreisscheibenförmigen Abschnitts 7 an einem inneren Rand der komplementären Ausnehmung 8. Mit dieser Technik ist einerseits eine sichere Kopplung zweier Träger 2 und andererseits ein flexibles Verlegen einer Codestrecke durch die Möglichkeit des Verschwenkens der Träger 2 relativ zueinander ermöglicht.

Bei der geradlinigen Anordnung der Träger 2 in Fig. 2 sind ebenfalls zwei Aussparungen 6 vorhanden, wobei diese Aussparungen 2 durch Blockierelemente 9 gefüllt sind, um ein ungewolltes, versehentliches Verschwenken der Träger 2 relativ zueinander zu verhindern und eine geradlinige Ausrichtung der Träger 2 sicher zu gewährleisten. Die Blockierelemente 9 können wahlweise - je nach Erfordernis - und auf einfache Weise in die Aussparungen 6 eingesetzt oder aus diesen Aussparungen 6 entnommen werden. Im Ergebnis ist ein flexibles Verlegen einer Codestrecke - auch um Kurven - mit der vorliegenden Ausführungsform ermöglicht. Bei an dem Eingriffselement 4 oder dem Aufnahmeelement 5 festgelegten Blockierelementen 9 kann eine geradlinige Ausrichtung der Träger 2 beim Verlegen quasi automatisch oder selbstständig erfolgen. Bei einer nachträglichen Korrektur der Verlegerichtung können ein oder mehrere Blockierelemente 9 - je nach Erfordernis - entnommen werden, um ein Verschwenken der Träger 2 relativ zueinander in der erforderlichen Weise zu ermöglichen. Das Ausmaß des Verschwenkens oder der gewünschte Winkel zwischen den Trägern 2 kann im gekoppelten Zustand des Eingriffselements 4 und des Aufnahmeelements 5 durch das Verschwenken um die Schwenkachse eingestellt werden.

Grundsätzlich kann das oder können die Blockierelemente 9 der Vorrichtung in beliebiger Art und Weise zugeordnet sein. So ist es in vorteilhafter Weise möglich, dass das oder die Blockierelemente 9 in einem ursprünglichen Zustand mit dem Aufnahmeelement 5 gekoppelt sind und je nach Bedarf - gegebenenfalls an einer Sollbruchstelle - von dem Aufnahmeelement 5 weggebrochen werden können. Bei dem in Fig. 3 gezeigten Ausführungsbeispiel ist eines der Blockierelemente 9 noch mit dem Aufnahmeelement 5 gekoppelt, auch wenn in der lediglich schematischen Darstellung der Fig. 3 ein Zwischenraum zwischen dem Blockierelement 9 und dem Aufnahmeelement 5 - der Übersichtlichkeit halber - vorhanden ist. Das Verbleiben dieses Blockierelements 9 an dem Aufnahmeelement 5 hat den Vorteil, dass zwischen dem Eingriffselement 4 und dem Aufnahmeelement 5 bzw. zwischen dem kreisscheibenförmigen Abschnitt 7 und der Ausnehmung 8 auch in dieser gekrümmten, kurvigen Anordnung der Träger 2 noch eine kraftschlüssige Kopplung der Träger 2 vorliegt, da die Ausnehmung 8 mit dem Blockierelement 9 im gekoppelten Zustand noch weiter als die Hälfte des Kreisumfangs des Abschnitts 7 um den Abschnitt 7 herum greift. Die Ausnehmung 8 kann bei einem anderen Ausführungsbeispiel auch grundsätzlich so weit um den Abschnitt 7 herum umgreifend ausgebildet sein, dass sie auch bei einer kurvigen Anordnung der Träger 2 und ohne ein noch an das Aufnahmeelement 5 gekoppeltes Blockierelement 9 weiter als um die Hälfte des Kreisumfangs des Abschnitts 7 herum greift, um ein versehentliches Auseinanderziehen der Träger 2 auch ohne Blockierelemente 9 zu verhindern. Eine derartige Ausgestaltung reduziert jedoch das - ohne Blockierelemente 9 bereitgestellte - mögliche Ausmaß eines Verschwenkens der Träger 2 relativ zueinander, da das Aufnahmeelement 5 bei einem Verschwenken dann früher an das Eingriffselement 4 innen anschlägt. Es können bei diesem Ausführungsbeispiel also keine so engen Kurven mit den Trägern 2 realisiert werden, wie bei dem in Fig. 3 gezeigten Ausführungsbeispiel, bei dem die Ausnehmung 8 ganz ohne Blockierelemente 9 den Abschnitt 7 nicht weiter, sondern eher weniger als die Hälfte des Kreisumfangs des Abschnitts 7 umgreifen würde. Eine kraftschlüssige Kopplung der Träger 2 ist hier nur mit einem mit dem Aufnahmeelement 5 gekoppelten Blockierelement 9 möglich.

Die Kopplung der Träger 2 sind sowohl für Geraden als auch für Kurven formschlüssig. Es kann die in Fig. 1 gezeigten drei oder auch mehr oder weniger Modullängen der Träger 2 geben, um unterschiedlichen Abschnitten mit unterschiedlicher Dynamik in einer gewünschten Codestrecke gerecht zu werden. Dabei ist zu gewährleisten, dass die Codes 1 auch an der Verbindungsstelle jederzeit gut mittels einer Kamera oder einem Detektor erkennbar sind.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Code
- 2: Träger
- 3: Kopplungseinrichtung
- 4: Eingriffselement
- 5: Aufnahmeelement
- 6: Aussparung
- 7: Abschnitt
- 8: Ausnehmung
- 9: Blockierelement

## Patentansprüche

1. Vorrichtung zur Präsentation eines Codes (1), insbesondere Codeband oder Codestreifen, mit einem Träger (2) und mindestens einem dem Träger (2) zugeordneten Code (1), wobei der Träger (2) eine Kopplungseinrichtung (3) zur Kopplung des Trägers (2) mit einem weiteren Träger (2) aufweist, wobei die Kopplungseinrichtung (3) ein Eingriffselement (4) und ein Aufnahmeelement (5) für das Eingriffselement (4) aufweist, wobei ein Eingriffselement (4) eines Trägers (2) mit einem Aufnahmeelement (5) eines weiteren Trägers (2) zur Kopplung der beiden Träger (2) miteinander in Eingriff bringbar ist und wobei mindestens ein Code (1) dem Eingriffselement (4) zugeordnet oder auf dem Eingriffselement (4) angeordnet ist,
**dadurch gekennzeichnet, dass** das Eingriffselement (4) und das Aufnahmeelement (5) im zusammengefügten Zustand relativ zueinander verschwenkbar sind.

2. Vorrichtung nach Anspruch 1, **dadurch gekennzeichnet, dass** das Eingriffselement (4) männlich und das Aufnahmeelement (5) weiblich ist.

3. Vorrichtung nach Anspruch 1 oder 2, **dadurch gekennzeichnet, dass** das Eingriffselement (4) und das Aufnahmeelement (5) komplementär zueinander ausgebildet sind.

4. Vorrichtung nach einem der Ansprüche 1 bis 3, **dadurch gekennzeichnet, dass** der Träger (2) sowohl ein Eingriffselement (4) als auch ein Aufnahmeelement (5) aufweist.

5. Vorrichtung nach einem der Ansprüche 1 bis 4, **dadurch gekennzeichnet, dass** die Kopplungseinrichtung (3) derart ausgebildet ist, dass ein lückenloses und/oder formschlüssiges Koppeln von Trägern (2) miteinander ermöglicht ist.

6. Vorrichtung nach einem der Ansprüche 1 bis 5, **dadurch gekennzeichnet, dass** das Eingriffselement (4) und das Aufnahmeelement (5) derart ausgebildet sind, dass im zusammengefügten Zustand des Eingriffselements (4) und des Aufnahmeelements (5) zwischen dem Eingriffselement (4) und dem Aufnahmeelement (5) mindestens eine Aussparung (6) zur Ermöglichung eines derartigen Verschwenkens gebildet ist.

7. Vorrichtung nach einem der Ansprüche 1 bis 6, **dadurch gekennzeichnet, dass** das Eingriffselement (4) einen kreisscheibenförmigen Abschnitt (7) aufweist, wobei das Aufnahmeelement (5) eine zu dem kreisscheibenförmigen Abschnitt (7) des Eingriffselements (4) im Wesentlichen komplementäre Ausnehmung (8) aufweist.

8. Vorrichtung nach einem der Ansprüche 1 bis 7, **dadurch gekennzeichnet, dass** die Kopplungseinrichtung (3) mindestens ein dem Aufnahmeelement (4) oder dem Eingriffselement (5) zuordenbares Blockierelement (9) zur Verhinderung eines Verschwenkens des Eingriffselements (4) und des Aufnahmeelements (5) - im zusammengefügten Zustand des Eingriffselements (4) und des Aufnahmeelements (5) - relativ zueinander aufweist.

9. Vorrichtung nach einem der Ansprüche 1 bis 8, **dadurch gekennzeichnet, dass** der Träger (2) aus Metall ausgebildet ist oder metallische Bestandteile aufweist und/oder dass der Träger (2) flächig ausgebildet ist.

## Claims

1. An apparatus for presenting a code (1), in particular code tape or code strip, having a carrier (2) and at least one code (1) assigned to the carrier (2), wherein the carrier (2) has a coupling device (3) for coupling the carrier (2) to a further carrier (2), wherein the coupling device (3) comprises an engaging element (4) and a receiving element (5) for the engaging element (4), wherein an engaging element (4) of a carrier (2) can be brought into engagement with a receiving element (5) of a further carrier (2) for coupling the two carriers (2) to each other and wherein at least one code (1) is associated with the engaging element (4) or is arranged on the engaging element (4), **characterized in that** the engaging element (4) and the receiving element (5) are pivotable relative to each other in the assembled state.

2. An apparatus according to claim 1, **characterized in that** the engaging element (4) is male and the receiving element (5) is female.

3. An apparatus according to claim 1 or 2, **characterized in that** the engaging element (4) and the receiving element (5) are formed complementary to each other.

4. An apparatus according to one of claims 1 through 3, **characterized in that** the carrier (2) comprises both an engaging element (4) and a receiving element (5).

5. An apparatus according to one of the claims 1 through 4, **characterized in that** the coupling device (3) is designed in such a way that a gapless and/or form-fitting coupling of carriers (2) to one another is made possible.

6. An apparatus according to any one of claims 1 through 5, **characterized in that** the engaging element (4) and the receiving element (5) being formed such that in the assembled state of the engaging element (4) and the receiving element (5) at least one slot (6) is formed between the engaging element (4) and the receiving element (5) for enabling such pivoting.

7. An apparatus according to any one of claims 1 through 6, **characterized in that** the engaging element (4) has a circular disc-shaped portion (7), wherein the receiving element (5) having a recess (8) substantially complementary to the circular disc-shaped portion (7) of the engaging element (4).

8. An apparatus according to one of claims 1 through 7, **characterized in that** the coupling device (3) comprises at least one blocking element (9), which can be associated with the receiving element (4) or the engaging element (5), for preventing the engaging element (4) and the receiving element (5) - in the assembled state of the engaging element (4) and the receiving element (5) - from pivoting relative to one another.

9. An apparatus according to one of the claims 1 through 8, **characterized in that** the carrier (2) is made of metal or has metallic components and/or that the carrier (2) is of flat design.

## Revendications

1. Dispositif de présentation d'un code (1), en particulier d'une bande de code ou d'un ruban de code, avec un support (2) et au moins un code (1) associé au support (2), le support (2) présentant un dispositif de couplage (3) pour coupler le support (2) à un autre support (2), le dispositif de couplage (3) présentant un élément d'engagement (4) et un élément de réception (5) pour l'élément d'engagement (4), un élément d'engagement (4) d'un support (2) pouvant être amené en engagement avec un élément de réception (5) d'un autre support (2) pour l'accouplement des deux supports (2) l'un avec l'autre et au moins un code (1) étant associé à l'élément d'engagement (4) ou étant agencé sur l'élément d'engagement (4),
**caractérisé en ce que** l'élément d'engagement (4) et l'élément de réception (5) peuvent pivoter l'un par rapport à l'autre à l'état assemblé.

2. Dispositif selon la revendication 1, **caractérisé en ce que** l'élément d'engagement (4) est mâle et l'élément de réception (5) est femelle.

3. Dispositif selon la revendication 1 ou 2, **caractérisé en ce que** l'élément d'engagement (4) et l'élément de réception (5) sont formés de manière complémentaire l'un par rapport à l'autre.

4. Dispositif selon l'une des revendications 1 à 3, **caractérisé en ce que** le support (2) présente à la fois un élément d'engagement (4) et un élément de réception (5).

5. Dispositif selon l'une des revendications 1 à 4, **caractérisé en ce que** le dispositif de couplage (3) est conçu de manière à permettre un couplage sans espace et/ou par complémentarité de forme des supports (2) entre eux.

6. Dispositif selon l'une des revendications 1 à 5, **caractérisé en ce que** l'élément d'engagement (4) et l'élément de réception (5) sont configurés de telle sorte que, lorsque l'élément d'engagement (4) et l'élément de réception (5) sont assemblés, au moins un évidement (6) est formé entre l'élément d'engagement (4) et l'élément de réception (5) pour permettre un tel pivotement.

7. Dispositif selon l'une des revendications 1 à 6, **caractérisé en ce que** l'élément d'engagement (4) présente une section en forme de disque circulaire (7), l'élément de réception (5) comportant un évidement (8) sensiblement complémentaire de la section en forme de disque circulaire (7) de l'élément d'engagement (4).

8. Dispositif selon l'une des revendications 1 à 7, **caractérisé en ce que** le dispositif de couplage (3) comporte au moins un élément de blocage (9) pouvant être associé à l'élément de réception (5) ou à l'élément d'engagement (4) pour empêcher un pivotement de l'élément d'engagement (4) et de l'élément de réception (5) (à l'état assemblé de l'élément d'engagement (4) et de l'élément de réception (5)) l'un par rapport à l'autre.

9. Dispositif selon l'une des revendications 1 à 8, **caractérisé en ce que** le support (2) est réalisé en métal ou présente des composants métalliques et/ou **en ce que** le support (2) est réalisé de manière plane.
